# FASCICULE DE BREVET EUROPEEN

(11) **EP 2 162 404 B1**
(45) Date de publication et mention de la délivrance du brevet: **12.07.2017**
(21) Numéro de dépôt: 08805786.4
(22) Date de dépôt: 15.05.2008
(51) Int. Cl.: C03C 3/087, C03C 3/097, C03C 13/00

(54) **FILS DE VERRE APTES A RENFORCER DES MATIERES ORGANIQUES ET/OU INORGANIQUES.**
ZUR VERSTÄRKUNG ORGANISCHER ODER ANORGANISCHER MATERIALIEN GEEIGNETE GLASGARNE
GLASS YARNS SUITABLE FOR REINFORCING ORGANIC AND/OR INORGANIC MATERIALS

(30) Priorité: 23.05.2007 FR 0755218
(43) Date de publication de la demande: 17.03.2010
(73) Titulaire: OCV Intellectual Capital, LLC, Toledo, OH 43659 (US)
(72) Inventeur: LALANDE, Jérôme, F-94500 Champigny (FR); BERTHEREAU, Anne, F-73190 Challes Les Eaux (FR)
(74) Mandataire: D Young & Co LLP
(86) Numéro de dépôt international: PCT/FR2008/050839
(87) Numéro de publication internationale: WO 2008/142347

(56) Documents cités:
- WO-A-99/01393
- WO-A-2007/055968
- WO-A-2008/087327
- JP-A- 11 029 344
- DATABASE WPI Week 199610 Thomson Scientific, London, GB; AN 1996-096212 XP002461174 -& RU 2 036 869 C1 (STEKLOPLASTIK RES PRODN ASSOC) 9 juin 1995 (1995-06-09)

## Description

L'invention se rapporte à des fils de verre destinés au renforcement de matières organiques et/ou inorganiques. Elle concerne également la composition de verre adaptée à la réalisation de tels fils de verre et les composites à base de telles matières renforcées par lesdits fils.

Le domaine des fils de verre de renforcement est un domaine très particulier de l'industrie du verre. Ces fils sont obtenus par le procédé qui consiste à étirer mécaniquement des filets de verre fondu s'écoulant d'orifices disposés à la base d'une filière généralement chauffée par effet Joule.

Les fils sont élaborés à partir de compositions de verre spécifiques qui doivent permettre l'obtention de filaments de quelques micromètres de diamètre et la formation de fils continus aptes à remplir la fonction de renfort dans des matières organiques et/ou inorganiques afin de leur conférer de meilleures propriétés mécaniques. Les fils de verre de renforcement sont utilisés tels quels ou sous forme d'assemblages organisés tels que des tissus.

Les propriétés mécaniques de ces matières renforcées sont principalement régies par la composition du verre qui constitue les fils de renforcement. Les verres les plus connus pour cet usage sont les verres de type « E » de composition SiO₂-Al₂O₃-CaO dont l'archétype est décrit dans les brevets US-A-2 334 981 et US-A-2 571 074 et qui présentent une composition essentiellement à base de silice, d'alumine, de chaux et d'anhydride borique. Ce dernier constituant, présent à une teneur variant de 5 à 13 %, est ajouté en remplacement de la silice, et il permet de fibrer le verre E dans des conditions très avantageuses, avec notamment une température de travail relativement basse, de l'ordre de 1200°C, une température de liquidus inférieure d'environ 120°C à la température de travail et une vitesse de dévitrification faible.

Par « température de travail » on entend la température à laquelle le verre a une viscosité égale à 1000 poises (notée T_{log3}). Par «température de liquidus » (notée T_{liq}) on entend la température à laquelle la phase la plus réfractaire, qui peut dévitrifier dans le verre, a une croissance nulle et correspond ainsi à la température de fusion de cette phase dévitrifiée. La température de liquidus donne la limite inférieure de température à laquelle il est possible de fibrer le verre.

La « plage de fibrage », notée ΔT, qui correspond à la différence entre la température de travail et la température de liquidus est un critère de mesure de l'aptitude d'une composition de verre fondu à cristalliser. En règle générale, le risque de dévitrification lors de l'étirage des filaments est évité quand la plage de fibrage ΔT est positive, de préférence supérieure à 50°C.

La composition du verre E définie dans la norme ASTM D 578-98 est la suivante (en pourcentage pondéral) : 52 à 56 % de SiO₂; 12 à 16 % d'Al₂O₃; 16 à 25% de CaO; 5 à 10 % de B₂O₃; 0 à 5 % de MgO; 0 à 2 % deNa₂O + K₂O; 0 à 0,8 % de TiO₂; 0,05 à 0,4 % de Fe₂O₃; 0 à 1 % de F₂.

L'anhydride borique B₂O₃, ainsi que le fluor F₂, joue le rôle de fondant dans le mélange de matières premières vitrifiables, ce qui, comme cela a déjà été mentionné, permet d'effectuer le fibrage du verre dans de meilleures conditions. Cependant, ces constituants ont pour inconvénient d'être volatils et de générer des émissions de bore et de fluor qui doivent nécessairement être traitées dans des installations de dépollution avant leur rejet dans l'atmosphère. La mise en oeuvre de ce traitement engendre un coût supplémentaire important au niveau des fils de verre. En outre, les matières premières à partir desquelles sont obtenus ces constituants, notamment B₂O₃ qui doit représenter au moins 5 % en poids du verre, sont relativement onéreuses.

La norme ASTM D 578-98 prévoit d'autres fils de renforcement de verre E qui peuvent ne pas contenir de bore. Ces fils ont la composition suivante (en pourcentage pondéral) : 52 à 62 % de SiO₂; 12 à 16 % d'Al₂O₃; 16 à 25 % de CaO; 0 à 10 % de B₂O₃; 0 à 5 % de MgO; 0 à 2 % de Na₂O+K₂O; 0 à 1,5% de TiO₂; 0,05 à 0,8 % de Fe₂O₃; 0 à 1 % de F₂.

De nombreuses compositions de verre particulier répondant à cette dernière norme ont été proposées.

Ainsi, US-A-3 847 626 décrit une composition de verre dans laquelle B₂O₃ et F₂ sont remplacés par de fortes teneurs en TiO₂ (3 à 5 %) et en MgO (1,5 à 4 %). Si les deux oxydes permettent de compenser l'absence de bore et de fluor tout en permettant le fibrage, en revanche le verre formé présente une coloration jaune due au TiO₂ qui tend à l'exclure de certaines applications. Une teneur élevée en TiO₂ (2 à 4 %), est également préconisée dans US-A-4 026 715, associée à des oxydes divalents tels que SrO, ZnO ou BaO, lesquels présentent toutefois l'inconvénient d'être onéreux.

US-A-4 199 364 décrit des compositions comprenant une teneur élevée en oxyde de lithium. Outre son coût élevé, celui-ci fait partie des oxydes alcalins connus pour dégrader l'aptitude des fibres au renforcement des supports de circuits électroniques.

Dans la demande WO 96/39362 sont décrites des compositions sans bore, le cas échéant sans fluor, formées essentiellement à partir du système quaternaire SiO₂-Al₂O₃-CaO-MgO, contenant une faible quantité de TiO₂ (moins de 0,9 %) et généralement exemptes d'oxydes coûteux tels que ceux décrits dans les demandes précitées. La température de liquidus et la température de travail de ces verres sont cependant relativement élevées.

Plus récemment, plusieurs tentatives ont été faites pour obtenir des verres à faible coût mais dont les conditions de fibrage se rapprochent de celles du verre E avec bore.

Ainsi, WO 99/12858 et WO 99/01393 décrivent des compositions de verre contenant de faibles quantités de B₂O₃ ou de F₂.

Dans WO 2007/055968, les compositions de verre contiennent de l'alumine et des oxydes de métal alcalin dans des proportions conformes à celles du verre E tel que défini dans la norme précitée.

Dans WO 00/73232, la baisse des températures caractéristiques est obtenue grâce à des compositions de verre combinant une faible teneur en MgO (moins de 1 %) et l'ajout d'une certaine quantité d'oxyde bore, d'oxyde de lithium, d'oxyde de zinc, ou d'oxyde de manganèse, ce qui réduit l'intérêt économique de ces compositions. Dans WO 00/73231, la température de liquidus est abaissée, notamment grâce à l'ajout de MgO dans une proportion étroite, entre 1,7 et 2,6 %, qui dans la plupart des compositions exemplifiées est associée à un oxyde choisi parmi l'oxyde de bore, l'oxyde de lithium, l'oxyde de zinc et l'oxyde de manganèse.

Une diminution des températures caractéristiques du fibrage est encore obtenue, dans WO 01/32576 par une composition de verre renfermant une faible teneur en silice (moins de 58 %), et dans US 2003/0224922 par la sélection de compositions de verre présentant un rapport pondéral de la silice à la somme des oxydes alcalino-terreux inférieur à 2,35.

On constate que les producteurs de fils de verre E selon la norme ASTM D 578-98 précitée ont eu pour préoccupation constante de diminuer le coût de la composition de verre en diminuant la teneur des constituants les plus onéreux que sont le bore et le fluor, tout en conservant une bonne aptitude du verre au fibrage, un faible niveau d'émissions polluantes et des propriétés compatibles avec un usage en tant que renfort de matières organiques et/ou inorganiques.

La présente invention a pour but de fournir des fils constitués d'un verre ayant une composition différente de celle du verre E, qui présentent un niveau de performance, notamment en termes de propriétés mécaniques et de résistance hydrolytique, comparable à celui-ci, et un coût plus faible.

Ce but est atteint selon l'invention grâce aux fils de verre à teneur plus faible en alumine, dont la composition comprend les constituants suivants dans les limites définies ci-après exprimées en pourcentages pondéraux :

| | |
|---|---|
| SiO₂ | 62 - 72 % |
| Al₂O₃ | 4 - 10 % |
| CaO | 8 - 22 % |
| MgO | 1 - 7 % |
| Na₂O + K₂O + Li₂O | 0 - 7 % |
| BaO+SrO | 0 % |
| B₂O₃ | 0 - 4 % |
| F₂ | 0 - 2 % |
| Autres constituants : TiO₂ + ZrO₂ | |
| + Fe₂O₃ (fer total) + P₂O₅ + MnO + Cr₂O₃ | |
| + MoO₃ + ZnO + SO₃ | 0 - 4 % |

ladite composition étant en outre caractérisée en ce que les teneurs pondérales des constituants suivants varient dans les limites ci-après :

| | |
|---|---|
| Na₂O | ≥ 3 %, de préférence < 6 % |
| K₂O | ≤ 1 %, de préférence ≤ 0,5 % |
| Li₂O | < 1 %, de préférence égale à 0 |

ou

| | |
|---|---|
| Na₂O | 2 - 4 % |
| K₂O | 2 - 4 % |
| Li₂O | < 1 %, de préférence égale à 0. |

La silice SiO₂ est l'un des oxydes qui forme le réseau des verres selon l'invention et joue un rôle essentiel pour leur stabilité. Dans le cadre de l'invention, lorsque le taux de silice est inférieur à 62 %, le verre obtenu n'est pas assez visqueux et dévitrifie trop facilement lors du fibrage. Au-delà de 72 %, le verre devient très visqueux et difficile à fondre. De préférence, le taux de silice est compris entre 63 et 71 %.

L'alumine Al₂O₃ constitue également un formateur du réseau des verres selon l'invention et joue un rôle essentiel à l'égard de la stabilité. La teneur en alumine est limitée à 10 %, essentiellement pour des raisons de réduction du coût final du verre. Une teneur en alumine inférieure à 4 % entraîne une augmentation sensible de l'attaque hydrolytique du verre et une diminution du module d'Young du verre. De préférence, la teneur en alumine est supérieure ou égale à 6 %, et mieux encore supérieure ou égale à 7 %.

De manière avantageuse, la somme des teneurs en silice et en alumine est supérieure à 72 %, de préférence supérieure à 73 % ce qui permet d'obtenir des valeurs intéressantes de la résistance hydrolytique. De préférence, la somme des teneurs en silice et en alumine est inférieure ou égale à 77 %.

La teneur en CaO permet d'ajuster la viscosité et de contrôler la dévitrification des verres. Dans le cadre des limites définies selon l'invention, une teneur en CaO supérieure à 22 % augmente la vitesse de dévitrification en Ca.SiO₃ (wollastonite) préjudiciable à un bon fibrage. Une teneur inférieure à 8 % diminue la résistance hydrolytique du verre de manière inacceptable. De préférence, la teneur en CaO est supérieure ou égale à 12 %, et avantageusement inférieure à 19 %.

La magnésie MgO permet, en relation avec CaO, de diminuer la température de liquidus du verre. L'ajout de MgO dans la teneur indiquée permet d'introduire une compétition entre la croissance des cristaux de wollastonite et la croissance des cristaux de diopside (CaO.MgO.2SiO₂), ce qui a pour effet de ralentir la croissance de ces deux types de cristaux et au final de conférer au verre une meilleure résistance à la dévitrification. En outre, MgO contribue à l'obtention d'une résistance hydrolytique élevée. La teneur en MgO varie de 1 à 7 %, de préférence de 3 à 5 %.

La composition de verre est exempte de BaO et SrO afin de ne pas augmenter le coût et la densité du verre (ce qui a pour effet de d'abaisser le module d'Young spécifique).

Les oxydes alcalins, Na₂O, K₂O et Li₂O, peuvent être introduits dans la composition selon l'invention pour contribuer à limiter la dévitrification et réduire la viscosité du verre. La teneur en oxydes alcalins doit cependant rester inférieure ou égale à 7 % pour ne pas dégrader la résistance hydrolytique du verre et maintenir les propriétés mécaniques du fil à un niveau acceptable. La teneur en oxydes alcalins est supérieure à 1 %.

Selon un premier mode de réalisation, la teneur en Na₂O est supérieure ou égale à 3 %, de préférencenférieure à 6 %, la teneur en K₂O est inférieure ou égale à 1 %, de préférence inférieure ou égale à 0,5 % et mieux encore inférieure ou égale à 0,3 %, et la teneur en Li₂O est inférieure à 1 % et de préférence est nulle.

Selon un deuxième mode de réalisation, la teneur en Na₂O varie de 2 à 4 %, de préférence est de l'ordre de 3 %, la teneur en K₂O varie également dans les mêmes limites, et la teneur en Li₂O est inférieure à 1 % et de préférence est nulle.

L'oxyde de bore B₂O₃ joue le rôle de fluidifiant. Sa teneur dans la composition de verre selon l'invention est limitée à 4 %, de préférence est inférieure ou égale à 2 %, pour éviter les problèmes de volatilisation et d'émission de polluants, et ne pas augmenter significativement le coût de la composition. Le bore peut être incorporé en tant que matière première sous la forme de déchets de fils de verre contenant du bore, notamment de verre E. En règle générale, les compositions selon l'invention sont exemptes de B₂O₃.

Du fluor peut être ajouté en faible quantité pour améliorer la fusion du verre, ou être présent à l'état d'impureté provenant des matières premières vitrifiables, sans toutefois excéder 2 %. De préférence, la teneur en fluor est inférieure à 1 % car au-delà peuvent survenir des risques d'émissions polluantes et de corrosion des réfractaires du four. En règle générale, les compositions selon l'invention sont exemptes de fluor.

Les constituants TiO₂, ZrO₂, Fe₂O₃ (fer total), P₂O₅, MnO, Cr₂O₃, MoO₃, ZnO et SO₃ peuvent être présents dans la composition de verre en une teneur totale au plus égale à 4 %, de préférence au plus égale à 2 %

De préférence, ces constituants sont présents dans les teneurs suivantes :

| | |
|---|---|
| TiO₂ | 0 - 2 %, notamment 0 - 1 % |
| ZrO₂ | 0 - 2 %, notamment 0 - 1 % |
| Fe₂O₃ (fer total) | 0 - 1 %, notamment 0 - 0,5 % |
| P₂O₅ | 0 - 2 % |
| MnO | 0 - 0,5 % |
| Cr₂O₃ | 0 - 0,5 % |
| MoO₃ | 0 - 0,5 % |
| ZnO | 0 - 2 |
| SO₃ | 0 - 1 % |

Les fils de verre selon l'invention sont obtenus à partir des verres de composition précédemment décrite selon le procédé suivant : on étire une multiplicité de filets de verre fondu, s'écoulant d'une multiplicité d'orifices disposés à la base d'une ou plusieurs filières, sous la forme d'une ou plusieurs nappes de fils continus, puis on rassemble les filaments en un ou plusieurs fils que l'on collecte sur un support en mouvement. Il peut s'agir d'un support en rotation lorsque les fils sont collectés sous la forme d'enroulements ou d'un support en translation lorsque les fils sont coupés par un organe servant également à les étirer ou lorsque les fils sont projetés par un organe servant à les étirer de façon à former un mat.

Les fils obtenus sont généralement composés de filaments de diamètre pouvant aller de 5 à 30 micromètres et leur masse linéique peut varier dans une large mesure.

Ces fils peuvent subir des opérations de transformation, par exemple en vue de les « voluminiser », de leur conférer une torsion ou de les assembler pour former des fils de masse linéique encore plus élevée. Les fils peuvent ainsi se présenter sous différentes formes : fils continus ou coupés, grilles, tissus, tricots, tresses, rubans ou mats. De préférence, les fils sont assemblés en structures se présentant sous la forme de grilles, de tissus et de mats.

Les fils présentant un diamètre de filaments inférieur ou égal à 11 micromètre et une masse linéique inférieure ou égale à 200 Tex sont plus particulièrement destinés à des applications textiles. Ces fils sont avantageusement retordus et/ou câblés et revêtus d'un ensimage spécifique leur permettant de résister aux opérations de tissage.

Les fils de diamètre et de masse linéique plus élevés, de préférence sans torsion, sont plus particulièrement destinés au renforcement des matières plastiques.

Le verre fondu alimentant les filières est obtenu à partir de matières premières pures (par exemple provenant de l'industrie chimique) ou plus généralement de matières naturelles (ces dernières contenant parfois des impuretés à l'état de traces), ces matières premières étant mélangées dans des proportions appropriées pour obtenir la composition désirée, puis étant fondues. La température du verre fondu (et donc sa viscosité) est réglée de façon traditionnelle de manière à permettre le fibrage en évitant les problèmes de dévitrification. Avant leur rassemblement sous forme de fils, les filaments sont généralement revêtus d'une composition d'ensimage visant à les protéger de l'abrasion et facilitant leur association ultérieure avec les matières à renforcer.

Eventuellement, les fils de verre selon l'invention peuvent être associés à des filaments de matière organique, par exemple en cours d'étirage, pour former des fils composites.

Les composites obtenus à partir des fils selon l'invention comprennent au moins une matière organique et/ou au moins une matière inorganique et des fils de verre, une partie au moins des fils étant des fils selon l'invention. Ces composites présentent de bonnes propriétés mécaniques et de résistance hydrolytique.

Les exemples qui suivent permettent d'illustrer l'invention sans toutefois la limiter.

### a) obtention des verres en masse

On élabore des verres ayant la composition figurant dans le tableau 1, exprimée en pourcentages pondéraux.

Les exemples 1 à 9 illustrent les verres selon l'invention ; les exemples C1 et C2 sont des exemples comparatifs : C1 est un verre sans bore issu de la demande WO-A-96/39362 et C2 est un verre E standard contenant du bore.

Dans le tableau 1 sont reportés :
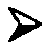 la température de travail T_{log3} correspondant à la température à laquelle la viscosité du verre est égale à 10³ poises,
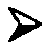 la température de liquidus T_{liqu} correspondant à la température à laquelle la phase la plus réfractaire, qui peut dévitrifier dans le verre, a une vitesse de croissance nulle et correspond ainsi à la température de fusion de cette phase dévitrifiée,
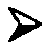 la plage de fibrage ΔT correspondant à la différence des températures entre T_{log3} et T_{liq},
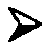 la température de ramollissement T_{log7,6} (point de Littleton) correspondant à la température à laquelle la viscosité du verre est égale à 10^{7,6} poises. Cette température est un indicateur pour estimer la résistance au feu du verre, et donc des composites le contenant.
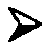 la valeur du module d'Young spécifique du verre en masse qui correspond au rapport du module d'Young mesuré selon la norme ASTM C 1259-01 à la masse volumique de l'échantillon de verre mesuré par la méthode d'Archimède. On précise qu'il existe une bonne corrélation entre le module d'Young spécifique mesuré sur le verre en masse et le module d'Young spécifique d'un fil constitué de filaments de ce même verre ; par conséquent, les valeurs du tableau 1 permettent de donner une estimation des propriétés mécaniques en termes de module du verre après fibrage.
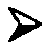 la résistance hydrolytique, évaluée par la méthode « DGG » (Deutsche Glastechniche Gesellschaft d'après Fisher et Fischer et Tepoel ; Glastech. Ber. ; vol. VI, p. 522 ; 1928) qui consiste à mesurer l'attaque à l'eau du verre. Pour cela, 10 g de verre broyé (taille des grains : 360-400 µm) sont plongés dans 100 ml d'eau à 98°C pendant 5 heures. Après refroidissement rapide, la solution est filtrée. Sur le filtrat, on mesure la masse de résidu sec, exprimée en mg/10 g de verre, et l'alcalinité correspondant à la masse d'alcalins déterminée par titrage avec de l'acide chlorhydrique, exprimée en mg équivalent Na₂O/10 g de verre.

Il apparaît que les exemples selon l'invention présentent un excellent compromis entre les propriétés de fusion et de fibrage, les propriétés mécaniques et la résistance hydrolytique.

Dans les exemples selon l'invention, la température de travail reste acceptable même si elle est plus élevée que les exemples C1 et C2, et la plage de fibrage est au moins égale à environ 50°C, pouvant atteindre 93°C (exemple 1).

Le module d'Young spécifique des exemples conformes à l'invention, en particulier l'exemple 4, est sensiblement équivalent à celui des exemples C1 et C2.

La résistance hydrolytique des exemples 1 et 8 est comparable à celle des exemples C1 et C2, et celle de l'exemple 9 est meilleure.

Les verres des exemples 4 à 6 présentent une température de ramollissement (point de Littleton) supérieure à celle du verre E avec bore (exemple C2), et par conséquent une meilleure tenue au feu.

### b) obtention des fils de verre

Des fils de verre (diamètre des filaments : 17 µm ; masse linéique : 235 tex) sont obtenus dans une installation de fibrage conventionnelle à partir des verres des exemples 4, 7 et C2.

La résistance en traction unitaire, mesurée dans les conditions de la norme ISO 3341, est donnée dans le tableau 2 suivant.

**Tableau 2**

| Exemple | Résistance en traction unitaire (RTU) (cN/tex) |
|---|---|
| 7 | 0,40 |
| 4 | 0,45 |
| C2 | 0,45 |

Le taux de casse des fils obtenus à partir des verres des exemples 4 et 7 selon l'invention est similaire à celui des fils de verre de l'exemple C2.

**TABLEAU 1**

| | Ex. 1 | Ex. 2 | Ex. 3 | Ex. 4 | Ex. 5 | Ex. 6 | Ex. 7 | Ex. 8 | Ex. 9 | C1 | C2 |
|---|---|---|---|---|---|---|---|---|---|---|---|
| SiO₂ (%) | 71,50 | 70,10 | 70,50 | 64,30 | 65,00 | 64,90 | 64,30 | 64,20 | 64,90 | 60,90 | 54,10 |
| Al₂O₃ (%) | 7,00 | 6,10 | 6,30 | 9,60 | 9,00 | 9,10 | 9,00 | 8,10 | 9,40 | 12,70 | 14,70 |
| CaO (%) | 10,40 | 12,80 | 14,00 | 17,20 | 16,50 | 16,70 | 16,50 | 16,90 | 16,80 | 22,00 | 22,20 |
| MgO (%) | 6,10 | 5,00 | 4,90 | 3,50 | 3,50 | 3,30 | 3,80 | 3,60 | 3,40 | 3,00 | 0,30 |
| Na₂O (%) | 4,60 | 5,60 | 3,90 | 4,80 | 3,10 | 3,30 | 3,00 | 3,80 | 4,90 | 0,30 | 0,50 |
| K₂O (%) | 0,20 | 0,20 | 0,20 | 0,30 | 2,70 | 2,30 | 3,10 | 2,30 | 0,30 | 0,40 | 0,30 |
| B₂O₃ (%) | - | - | - | - | - | - | - | - | - | - | 7,30 |
| Fe₂O₃ (%) | 0,13 | 0,12 | 0,11 | 0,15 | - | 0,15 | 0,20 | 0,90 | 0,14 | 0,30 | - |
| Autres ^{(*)} | 0,13 | 0,08 | 0,09 | 0,20 | 0,20 | 0,20 | 0,10 | 0,34 | 0,24 | 0,50 | 0,60 |
| T_{log3} (°C) | 1363 | 1316 | 1309 | 1279 | 1290 | 1311 | 1288 | 1299 | 1288 | 1268 | 1203 |
| T_{liq} (°C) | 1270 | 1250 | 1260 | 1220 | 1230 | 1220 | 1230 | 1230 | 1220 | 1180 | 1080 |
| ΔT (°C) | 93 | 66 | 49 | 59 | 60 | 91 | 58 | 69 | 68 | 88 | 123 |
| T_{log7,6} (°C) | n. d. | n. d. | n. d. | 865 | 876 | 876 | n. d. | n. d. | n. d. | 920 | 840 |
| Module d'Young spécifique (MPa/kg/m³) | 32,8 | 31,9 | 32,2 | 33,3 | 32,1 | 32,2 | 32,1 | 31,8 | 32,3 | 33,2 | 33,3 |
| Masse volumique (g/cm³) | 2,51 | 2,52 | 2,51 | 2,57 | 2,57 | 2,55 | 2,56 | 2,58 | 2,58 | 2,66 | 2,62 |
| Résistance hydrolytique | | | | | | | | | | | |
| Résidu (mg/10 g) | 8,3 | 9,0 | 10,8 | 10,2 | 10,4 | 8,4 | 8,1 | 7,9 | 6,7 | 8,4 | 7,0 |
| Alcalinité (mg équivalent Na₂O/10 g) | 1,9 | 2,2 | 2,8 | 1,8 | 2,0 | 1,6 | 2,0 | 2,2 | 1,7 | 1,6 | n. d. |

| | | | | | | | | | | | |
|---|---|---|---|---|---|---|---|---|---|---|---|
| n. d. : non déterminé ^{(*)} (TiO₂, ZrO₂, P₂O₅, MnO, Cr₂O₃, MoO₃, SO₃) | | | | | | | | | | | |

## Revendications

1. Fil de verre de renforcement dont la composition comprend les constituants suivants dans les limites définies ci-après exprimées en pourcentages pondéraux :
| | |
|---|---|
| SiO₂ | 62 - 72 % |
| Al₂O₃ | 4 - 10 % |
| CaO | 8 - 22 % |
| MgO | 1 - 7 % |
| Na₂O + K₂O + Li₂O | 0 - 7 % |
| BaO + SrO | 0 % |
| B₂O₃ | 0 - 4 % |
| F₂ | 0 - 2 % |
| Autres constituants : TiO₂ + ZrO₂ | |
| + Fe₂O₃ (fer total) + P₂O₅ + MnO + Cr₂O₃ | |
| + MoO₃ + ZnO + SO₃ | 0 - 4 % |
ladite composition étant en outre **caractérisée en ce que** les teneurs pondérales des constituants suivants varient dans les limites ci-après :
| | |
|---|---|
| Na₂O | ≥ 3 %, de préférence < 6 % |
| K₂O | ≤ 1 %, de préférence ≤ 0,5 % |
| Li₂O | < 1 %, de préférence égale à 0 |
ou
| | |
|---|---|
| Na₂O | 2 - 4 % |
| K₂O | 2 - 4 % |
| Li₂O | < 1 %, de préférence égale à 0 |

2. Fil de verre selon la revendication 1, **caractérisé en ce que** la teneur en SiO₂ est comprise entre 63 et 71 %.

3. Fil de verre selon l'une des revendications 1 ou 2, **caractérisé en ce que** la teneur en Al₂O₃ est supérieure ou égale à 6 %, de préférence supérieure ou égale à 7 %.

4. Fil de verre selon l'une des revendications 1 à 3, **caractérisé en ce que** la somme des teneurs en SiO₂ et Al₂O₃ est supérieure à 72 %, de préférence supérieure à 73 %, et mieux encore inférieure ou égale à 77 %.

5. Fil de verre selon l'une des revendications 1 à 4, **caractérisé en ce que** la teneur en CaO est supérieure ou égale à 12 %, de préférence inférieure à 19 %.

6. Fil de verre selon l'une des revendications 1 à 5, **caractérisé en ce que** la teneur en MgO varie de 3 à 5 %.

7. Fil de verre selon l'une des revendications 1 à 6, **caractérisé en ce que** la teneur en B₂O₃ n'excède pas 2 % et de préférence est nulle.

8. Fil de verre selon l'une des revendications 1 à 7, **caractérisé en ce que** la teneur en F₂ est inférieure à 1 % et de préférence est nulle.

9. Composition de verre adaptée à la réalisation de fils de verre de renforcement selon l'une des revendications 1 à 8, qui comprend les constituants suivants dans les limites définies ci-après exprimées en pourcentages pondéraux :
| | |
|---|---|
| SiO₂ | 62 - 72 % |
| Al₂O₃ | 4 - 10 % |
| CaO | 8 - 22 % |
| MgO | 1 - 7 % |
| Na₂O + K₂O + Li₂O | 0 - 7 % |
| BaO + surO | 0 % |
| B₂O₃ | 0 - 4 % |
| F₂ | 0 - 2 % |
| Autres constituants : TiO₂ + ZrO₂ + Fe₂O₃ (fer total) + P₂O₅ + MnO + Cr₂O₃ + MoO₃ + ZnO + SO₃ | 0 - 4 % |
ladite composition étant en outre **caractérisée en ce que** les teneurs pondérales des constituants suivants varient dans les limites ci-après :
| | |
|---|---|
| Na₂O | ≥ 3 %, de préférence < 6 % |
| K₂O | ≤ 1 %, de préférence ≤ 0,5 % |
| Li₂O | < 1 %, de préférence égale à 0 |
ou
| | |
|---|---|
| Na₂O | 2 - 4 % |
| K₂O | 2 - 4 % |
| Li₂O | < 1 %, de préférence égale à 0 |

10. Composition de verre selon la revendication 9, **caractérisée en ce qu'**elle présente une plage de fibrage ΔT au moins égale à environ 50°C.

11. Structure comprenant des fils de verre de renforcement, en particulier un mat, une grille ou un tissu, **caractérisé en ce qu'**il comprend des fils de verre tels que définis par l'une des revendications 1 à 8.

12. Composite de fils de verre et de matière(s) organique(s) et/ou inorganique(s), **caractérisé en ce qu'**il comprend des fils de verre tels que définis par l'une des revendications 1 à 8.

## Patentansprüche

1. Verstärkungsglasfaser, deren Zusammensetzung die folgenden Bestandteile innerhalb der nachstehend definierten Grenzen, ausgedrückt in Gewichtsprozent, umfasst:
| | |
|---|---|
| SiO₂ | 62-72% |
| Al₂O₃ | 4-10% |
| CaO | 8-22% |
| MgO | 1-7% |
| Na₂O + K₂O + Li₂O | 0-7% |
| BaO + SrO | 0% |
| B₂O₃ | 0-4% |
| F₂ | 0-2% |
| andere Bestandteile: TiO₂ + ZrO₂ + Fe₂O₃ (Eisen insgesamt) + P₂O₅ + MnO + Cr₂O₃ + MoO₃ + ZnO + SO₃ | 0-4% |
wobei die Zusammensetzung außerdem **dadurch gekennzeichnet ist, dass** die Gewichtsanteile der folgenden Bestandteile in den nachstehenden Grenzen variieren:
| | |
|---|---|
| Na₂O | ≥ 3%, vorzugsweise < 6% |
| K₂O | ≤ 1%, vorzugsweise ≤ 0,5% |
| Li₂O | < 1%, vorzugsweise gleich 0 |
oder
| | |
|---|---|
| Na₂O | 2-4% |
| K₂O | 2-4% |
| Li₂O | < 1%, vorzugsweise gleich 0 |

2. Glasfaser nach Anspruch 1, **dadurch gekennzeichnet, dass** der Gehalt an SiO₂ zwischen 63 und 71% beträgt.

3. Glasfaser nach einem der Ansprüche 1 oder 2, **dadurch gekennzeichnet, dass** der Gehalt an Al₂O₃ höher als oder gleich 6%, vorzugsweise höher als oder gleich 7% ist.

4. Glasfaser nach einem der Ansprüche 1 bis 3, **dadurch gekennzeichnet, dass** die Summe der Gehalte an SiO₂ und Al₂O₃ höher als 72%, vorzugsweise höher als 73% und noch besser kleiner oder gleich 77% ist.

5. Glasfaser nach einem der Ansprüche 1 bis 4, **dadurch gekennzeichnet, dass** der Gehalt an CaO höher als oder gleich 12%, vorzugsweise höher als oder gleich 19% ist.

6. Glasfaser nach einem der Ansprüche 1 bis 5, **dadurch gekennzeichnet, dass** der Gehalt an MgO von 3 bis 5% variiert.

7. Glasfaser nach einem der Ansprüche 1 bis 6, **dadurch gekennzeichnet, dass** der Gehalt an B₂O₃ 2% nicht übersteigt und vorzugsweise null ist.

8. Glasfaser nach einem der Ansprüche 1 bis 7, **dadurch gekennzeichnet, dass** der Gehalt an F₂ kleiner als 1% und vorzugsweise null ist.

9. Glaszusammensetzung für die Herstellung von Verstärkungsglasfasern nach einem der Ansprüche 1 bis 8, die die folgenden Bestandteile innerhalb der nachstehend definierten Grenzen, ausgedrückt in Gewichtsprozent, umfasst:
| | |
|---|---|
| SiO₂ | 62-72% |
| Al₂O₃ | 4-10% |
| CaO | 8-22% |
| MgO | 1 - 7% |
| Na₂O + K₂O + Li₂O | 0 - 7% |
| BaO + SrO | 0% |
| B₂O₃ | 0 - 4% |
| F₂ | 0 -2% |
| andere Bestandteile: TiO₂ + ZrO₂ + | |
| Fe₂O₃ (Eisen insgesamt) + P₂O₅ + MnO | |
| + Cr₂O₃ + MoO₃ + ZnO + SO₃ | 0-4% |
wobei die Zusammensetzung außerdem **dadurch gekennzeichnet ist, dass** die Gewichtsanteile der folgenden Bestandteile in den nachstehenden Grenzen variieren:
| | |
|---|---|
| Na₂O | ≥ 3%, vorzugsweise < 6% |
| K₂O | ≤ 1%, vorzugsweise ≤ 0,5% |
| Li₂O | < 1%, vorzugsweise gleich 0 |
oder
| | |
|---|---|
| Na₂O | 2-4% |
| K₂O | 2-4% |
| Li₂O | < 1%, vorzugsweise gleich 0 |

10. Glaszusammensetzung nach Anspruch 9, **dadurch gekennzeichnet, dass** sie einen Faserziehbereich ΔT von mindestens gleich etwa 50°C aufweist.

11. Struktur, die Verstärkungsglasfasern umfasst, insbesondere eine Matte, ein Gitter oder ein Gewebe, **dadurch gekennzeichnet, dass** sie/es Glasfasern nach einem der Ansprüche 1 bis 8 umfasst.

12. Verbundwerkstoff aus Glasfasern und organische(r/n) und/oder anorganische (r/n) Substanz(en), **dadurch gekennzeichnet, dass** er Glasfasern nach einem der Ansprüche 1 bis 8 umfasst.

## Claims

1. Reinforcing glass yarn, the composition of which comprises the following constituents, within the limits defined below, expressed in percentages by weight:
| | |
|---|---|
| SiO₂ | 62 - 72% |
| Al₂O₃ | 4 - 10% |
| CaO | 8 - 22% |
| MgO | 1 - 7% |
| Na₂O + K₂O + Li₂O | 0 - 7% |
| BaO + SrO | 0% |
| B₂O₃ | 0 - 4% |
| F₂ | 0-2% |
| Other constituents : TiO₂ + ZrO₂ | |
| + Fe₂O₃ (total iron) + P₂O₅ + MnO + Cr₂O₃ | |
| + MoO₃ + ZnO + SO₃ | 0 - 4% |
said composition being moreover **characterized in that** the contents by weight of the following constituents vary within the limits below:
| | |
|---|---|
| Na₂O | ≥ 3%, preferably < 6% |
| K₂O | ≤ 1%, preferably ≤ 0.5% |
| Li₂O | < 1%, preferably equal to 0 |
or
| | |
|---|---|
| Na₂O | 2 - 4% |
| K₂O | 2 - 4% |
| Li₂O | < 1%, preferably equal to 0 |

2. Glass yarn according to claim 1, **characterized in that** the SiO₂ content is comprised between 63 and 71%.

3. Glass yarn according to one of claims 1 or 2, **characterized in that** the Al₂O₃ content is greater than or equal to 6%, preferably greater than or equal to 7%.

4. Glass yarn according to one of claims 1 to 3, **characterized in that** the sum of the SiO₂ and Al₂O₃ contents is greater than 72%, preferably greater than 73%, and even better less than or equal to 77%.

5. Glass yarn according to one of claims 1 to 4, **characterized in that** the CaO content is greater than or equal to 12%, preferably less than 19%.

6. Glass yarn according to one of claims 1 to 5, **characterized in that** the MgO content varies from 3 to 5%.

7. Glass yarn according to one of claims 1 to 6, **characterized in that** the B₂O₃ content does not exceed 2% and preferably is zero.

8. Glass yarn according to one of claims 1 to 7, **characterized in that** the F₂ content is less than 1% and preferably is zero.

9. Glass composition capable of producing reinforcing glass yarns according to one of claims 1 to 8, which comprises the following constituents, within the limits defined below, expressed in percentages by weight:
| | |
|---|---|
| SiO₂ | 62 - 72% |
| Al₂O₃ | 4 - 10 % |
| CaO | 8 - 22% |
| MgO | 1 - 7% |
| Na₂O + K₂O + Li₂O | 0 - 7% |
| BaO + SrO | 0% |
| B₂O₃ | 0 - 4% |
| F₂ | 0 - 2% |
| Other constituents : TiO₂ + ZrO₂ + Fe₂O₃ (total iron) + P₂O₅ + MnO + Cr₂O₃ + MoO₃ + ZnO + SO₃ | 0 - 4% |
said composition being moreover **characterized in that** the contents by weight of the following constituents vary within the limits below:
| | |
|---|---|
| Na₂O | ≥ 3%, preferably < 6% |
| K₂O | ≤ 1 %, preferably ≤ 0.5% |
| Li₂O | < 1 %, preferably equal to 0 |
or
| | |
|---|---|
| Na₂O | 2 - 4% |
| K₂O | 2 - 4% |
| Li₂O | < 1 %, preferably equal to 0 |

10. Glass composition according to claim 9, **characterized in that** it has a fiberizing range ΔT at least equal to approximately 50°C.

11. Structure comprising reinforcing glass yarns, in particular a mat, a mesh or a fabric, **characterized in that** it comprises glass yarns as defined by one of claims 1 to 8.

12. Composite of glass yarns and organic and/or inorganic material(s), **characterized in that** it comprises glass yarns as defined by one of claims 1 to 8.
